# FASCICULE DE BREVET EUROPEEN

(11) **EP 3 761 612 B1**
(45) Date de publication et mention de la délivrance du brevet: **17.01.2024**
(21) Numéro de dépôt: 20184755.5
(22) Date de dépôt: 03.06.2015
(51) Int. Cl.: H04L 65/1016, H04L 65/1069

(54) **PROCÉDÉ D'ÉTABLISSEMENT D'UNE SESSION WEBRTC**
VERFAHREN ZUM STARTEN EINER WEBRTC-SESSION
METHOD FOR ESTABLISHING A WEBRTC SESSION

(30) Priorité: 10.06.2014 FR 1455262
(43) Date de publication de la demande: 06.01.2021
(62) Demande divisionnaire de: 15733791.6
(73) Titulaire: Orange, 92130 Issy-les-Moulineaux (FR)
(72) Inventeur: CHATRAS, Bruno, 92326 Chatillon (FR)

(56) Documents cités:
- CN-A- 103 581 397
- Alan B Johnston ET AL: "WebRTC: APIs and RTCWEB Protocols of the HTML5 Real-Time Web", , 1 juin 2013 (2013-06-01), pages 1-254, XP055316491, ISBN: 978-0-9859788-5-3 Extrait de l'Internet: URL:http://www.docfoc.com/webrtc-apis-and- rtcweb-protocols-of-the-html5-real-time-we b-second-editionpdf [extrait le 2016-11-04]
- "3rd Generation Partnership Project; Technical Specification Group Core Network and Terminals; Numbering, addressing and identification (Release 12)", 3GPP STANDARD; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.2.0, 22 février 2014 (2014-02-22), pages 1-87, XP050769545, [extrait le 2014-02-22]
- BAZ CASTILLO J MILLAN VILLEGAS VERSATICA V PASCUAL QUOBIS I: "The WebSocket Protocol as a Transport for the Session Initiation Protocol (SIP); draft-ietf-sipcore-sip-websocket-10.txt", THE WEBSOCKET PROTOCOL AS A TRANSPORT FOR THE SESSION INITIATION PROTOCOL (SIP); DRAFT-IETF-SIPCORE-SIP-WEBSOCKET-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZE, 29 novembre 2013 (2013-11-29), pages 1-24, XP015092773, [extrait le 2013-11-29]
- "3rd Generation Partnership Project; Technical Specification Group Services and System Aspects; IP Multimedia Subsystem (IMS); Stage 2 (Release 12)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.3.0, 13 décembre 2013 (2013-12-13), pages 1-298, XP050728768,
- "3rd Generation Partnership Project; Technical Specification Group Core Network and Terminals; Characteristics of the IP Multimedia Services Identity Module (ISIM) application (Release 12)", 3GPP STANDARD; 3GPP TS 31.103, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG6, no. V12.1.0, 19 mars 2014 (2014-03-19), pages 1-44, XP050769955, [extrait le 2014-03-19]

## Description

### 1. Domaine de l'invention

La demande d'invention se situe dans le domaine des communications électroniques à l'aide de terminaux mobiles, et plus particulièrement dans le domaine des communications WebRTC (Web Real-Time Communication, ou communication web en temps réel).

### 2. Etat de la technique antérieure

La technologie WebRTC permet d'établir une session de communication voix et vidéo à partir d'un navigateur Web et par extension d'une application dont le comportement externe est équivalent à celui d'un navigateur. Aujourd'hui, pour lancer une communication utilisant la technologie WebRTC depuis un téléphone mobile (typiquement un Smartphone), l'utilisateur doit généralement lancer un navigateur compatible (ex : Chrome) puis cibler une URL (Uniform Resource Locator, ou adresse web) particulière, correspondant au service WebRTC qu'il souhaite utiliser. Le navigateur reçoit en retour une page HTML5 (HyperText Markup Language version 5, format de représentation de pages web) encapsulant du code JavaScript (langage de programmation de scripts principalement utilisé dans les pages web interactives) lui permettant de saisir le numéro qu'il souhaite appeler ou de le sélectionner dans un carnet d'adresse hébergé par le serveur ou dans un carnet d'adresse du mobile ou de la carte UICC (Universal Integrated Circuit Card, ou carte universelle à circuit intégré, aussi connue sous le nom de carte SIM, pour Subscriber Identification Module, ou module d'identification d'abonné), si le code encapsulé dans la page HTML5 le prévoit, et le terminal mobile le permet.

Cette manière de faire n'est pas optimale du point de vue ergonomique puisqu'elle nécessite une double saisie (saisie de l'URL, puis saisie du numéro de téléphone du destinataire). Elle impose également à l'utilisateur de connaître l'URL à utiliser, selon qu'il souhaite que ces appels soient traités par son opérateur mobile, par exemple via une passerelle vers l'IMS (IP Multimedia Subsystem, ou sous-système IP multimédia, système permettant aux opérateurs de télécommunications électroniques de fournir des services multimédias fixes et mobiles), ou par un fournisseur de service tiers.

Cette manière de faire n'est pas non plus optimale du point de vue de la qualité de service, car elle peut conduire l'utilisateur à passer par un service qui n'est pas celui de son opérateur mobile, de sorte qu'il ne puisse pas bénéficier des mêmes services que si l'appel était passé passé en utilisant le logiciel natif d'un terminal mobile, qu'il s'agisse d'un client IMS pour un terminal compatible VoLTE (Voice over LTE, ou voix sur LTE; LTE, Long Term Evolution, est le nom de l'évolution la plus récente des normes de téléphonie mobile aussi connue sous l'appellation 4G) ou d'un logiciel permettant de passer des appels en mode circuit.

Le protocole WebSocket, transports par le protocole SIP, permet des communications bidirectionnelles en temps reel a l'aide d'applications Web, mais ne remedie pas aux inconvénients ci-dessus. On en trouve des descriptions dans les documents suivants: le document "WebRTC: APIs and RTCWEB Protocols of the HTML5 Real-Time Web", de Alan Johnston et al., 1er juin 2013, ISBN 978-0-9859788-5-3; le document 3GPP TS 23.003 V12.0.0 "3rd Génération Partnership Project; Technical Spécification Group Core Network and Terminais; Numbering, addressing and identification (Release 12)", 22 février 2014; le document "The WebSocket Protocol as a Transport for the Session Initiation Protocol (SIP)", draft-ietfsipcore-sip-websocket-1 0.txt, de Baz Castillo et al., 29 novembre 2013, IETF, Internet Society.

Un des buts de l'invention est de remédier à ces inconvénients de l'état de la technique.

### 3. Exposé de l'invention

L'invention vient améliorer la situation à l'aide d'un procédé d'établissement d'une session entre un premier terminal mobile et un deuxième terminal, conforme à l'objet de la revendication 1.

Afin d'établir une communication de type WebRTC, un premier terminal se connecte à un serveur WebRTC, reçoit un formulaire html ou du code JavaScript qu'il utilise pour demander une session avec un deuxième terminal. Le premier terminal utilise pour cela un navigateur Web échangeant des requêtes HTTP ou des messages SIP avec le serveur WebRTC, par exemple.

Le serveur traite la demande de session et émet vers le deuxième terminal une demande de session de la part du premier terminal.

La demande de session émise par le premier terminal comprend une liste de paramètres de session, par exemple une liste de codecs que le premier terminal est capable d'utiliser. Cette liste est transmise par le serveur au deuxième terminal.

Si le deuxième terminal accepte la demande de session émise par le serveur de la part du premier terminal, il répond selon un processus similaire mais dans l'autre sens, en indiquant un sous-ensemble de paramètres de session qu'il est capable de mettre en oeuvre, par exemple une sous-listes de codecs du premier terminal qu'il est capable d'utiliser.

La session est enfin établie directement entre le premier et le deuxième terminal, utilisant des paramètres de session communs aux deux terminaux, tels que par exemple un codec commun.

Cette procédure d'établissement de session n'est possible que si le premier terminal est capable d'obtenir l'identifiant du bon serveur WebRTC afin de s'y connecter.

Avantageusement, grâce au procédé d'établissement d'une session selon l'invention, la sélection du serveur WebRTC est effectué par un module d'abonné compris dans le premier terminal, par exemple une carte SIM. Ce module comprend, en plus des identifiants d'abonné et d'opérateur mobile, un identifiant du serveur WebRTC, qui peut être une adresse partielle ou complète du serveur, par exemple sous la forme d'une URL. L'utilisateur ou l'abonné n'a plus besoin de sélectionner lui-même un serveur WebRTC, ni à entrer lui-même l'URL de ce serveur dans un navigateur. La sélection du serveur WebRTC est effectuée par son opérateur mobile, en adéquation optimale avec les caractéristiques du réseau géré par celui-ci.

Selon un aspect de l'invention, le module d'abonné est une carte SIM. L'abonné peut ainsi changer de terminal mobile tout en continuant de bénéficier des avantages liés à l'invention, s'il retire la carte SIM de l'ancien terminal et l'insère dans le nouveau.

Selon un aspect de l'invention, la requête de session comprend l'identifiant du deuxième terminal.

Grâce à cet aspect, lorsque le premier terminal émet une requête http vers le serveur WebRTC, il peut inclure dans l'URL une adresse du deuxième terminal, par exemple le numéro de téléphone, concaténé à l'URL partiel ou complet du serveur WebRTC. Ainsi, la requête est unique et ne nécessite pas que l'abonné entre, dans un deuxième temps, le numéro du deuxième terminal pour un autre message à destination du serveur.

Selon un aspect de l'invention, le procédé d'établissement d'une session comprend une étape de sélection de l'identifiant du deuxième terminal à partir d'un carnet d'adresses.

Grâce à cet aspect, l'identifiant du deuxième terminal est sélectionné par l'utilisateur ou l'abonné dans un carnet d'adresse ordinaire, hébergé localement dans la mémoire de son terminal mobile ou de la carte SIM, ou dans une base de données distante interrogée par un procédé connu.

Selon un aspect de l'invention, l'étape de sélection de l'identifiant du deuxième terminal déclenche l'étape d'obtention de l'identifiant du serveur.

Grâce à cet aspect, c'est lorsque l'abonné sélectionne un contact dans son carnet d'adresse habituel, que la session est automatiquement établie à l'aide du serveur WebRTC dont l'adresse est comprise dans la carte SIM de son terminal. Ainsi, tout se passe pour l'abonné comme si l'appel porté par la session était un appel utilisant le réseau mobile classique de son opérateur, par exemple un appel VoLTE, et non un appel WebRTC.

L'abonné n'a donc pas à se préoccuper si l'appel doit passer par le réseau classique de son opérateur, un réseau VoLTE par exemple, ou par Internet via un serveur WebRTC, puisque le serveur WebRTC qui est choisi par son opérateur grâce à l'invention est celui qui lui permet d'obtenir la qualité de service qui s'approche le plus de celle d'un appel VoLTE.

Les différents aspects du procédé d'établissement d'une session qui viennent d'être décrits peuvent être mis en oeuvre indépendamment les uns des autres ou en combinaison les un avec les autres.

L'invention concerne aussi un dispositif d'établissement d'une session entre un premier terminal mobile et un deuxième terminal, conforme à l'objet de la revendication 8.

Le dispositif d'établissement d'une session entre un premier terminal mobile et un deuxième terminal est compris dans un terminal mobile et est apte à mettre en oeuvre le procédé d'établissement d'une session qui vient d'être décrit, dans tous ses modes de réalisation.

Les modules d'émission, de génération, de réception et d'établissement peuvent faire partie d'un navigateur web, ou d'une application dédiée compatible WebRTC, installé(e) sur le terminal mobile. Le module d'obtention peut faire partie d'une application installée sur la carte SIM du terminal mobile.

L'invention concerne également un terminal mobile comprenant un dispositif d'établissement d'une session entre un premier terminal mobile et un deuxième terminal, conforme à celui qui vient d'être décrit.

L'invention concerne aussi un programme d'ordinateur comprenant des instructions pour la mise en oeuvre des étapes du procédé d'établissement d'une session entre un premier terminal mobile et un deuxième terminal qui vient d'être décrit, lorsque ce programme est exécuté par un processeur.

L'invention concerne enfin un support d'enregistrement lisible par un équipement de gestion sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Avantageusement, le programme selon l'invention peut être soit installé sous une forme exécutable dans le terminal mobile selon l'invention, soit installé sous une forme téléchargeable sur un serveur d'applications distinct du terminal. Dans ce dernier cas le programme peut être téléchargé du serveur d'applications vers le terminal à l'initiative de l'utilisateur du terminal.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un exemple de mise en oeuvre des étapes d'un procédé d'établissement d'une session entre un premier terminal mobile et un deuxième terminal, selon l'invention,
- la figure 2 présente un exemple de structure d'un dispositif d'établissement d'une session entre un premier terminal mobile et un deuxième terminal, selon un aspect de l'invention.

### 5. Description détaillée d'au moins un mode de réalisation de l'invention

Dans la suite de la description, on présente des exemples de plusieurs modes de réalisation de l'invention se basant sur la norme 3GPP LTE/EPC, mais l'invention s'applique également à d'autres normes 3GPP antérieures ou postérieures, telles que UMTS (Universal Mobile Telecommunications System, aussi connu sous l'appellation 3G) ou la 5G.

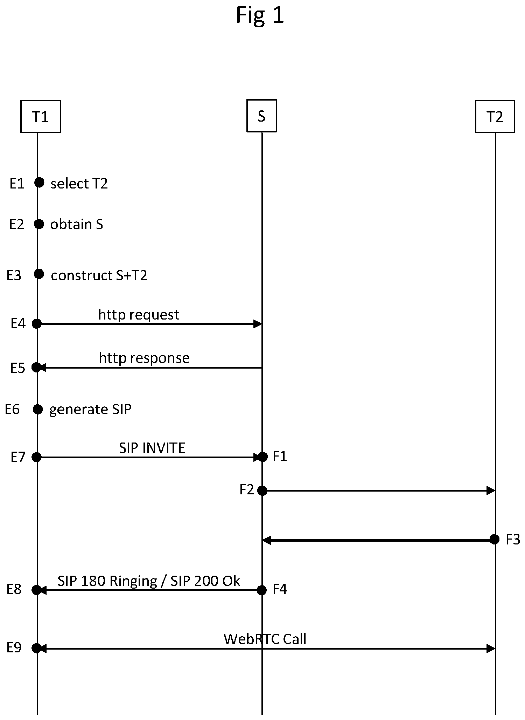

La **figure 1** présente de façon schématique un exemple de mise en oeuvre des étapes d'un procédé d'établissement d'une session entre un premier terminal mobile T1 et un deuxième terminal T2, selon l'invention.

Dans cet exemple, l'utilisateur d'un terminal mobile T1 appelle l'utilisateur d'un autre terminal T2, pour une communication voix ou vidéo avec lui au travers des terminaux.

Le terminal T1 est un terminal mobile comprenant un module d'abonné, c'est à dire une carte SIM comprenant un identifiant d'un abonné à un opérateur de communications électroniques mobiles, ainsi qu'un identifiant de l'opérateur. Un tel module permet au terminal T1 d'établir une session "temps réel" pour transporter de la voix ou de la vidéo entre ce terminal et un autre terminal T2 en utilisant les ressources de cet opérateur, ou celles d'un autre opérateur ayant établi des accords d'itinérance avec lui. Cette session temps réel utilise un ou des codecs pour le passage de la voix/vidéo de la forme analogique à la forme numérique et vice-versa. Le terminal T1 est capable d'utiliser un ensemble de codecs qui n'est pas forcément le même que celui de T2. Un négociation doit donc avoir donc lieu entre les terminaux T1 et T2 pour déterminer le ou les codecs à utiliser.

Le terminal T1 est également apte à établir une session WebRTC, c'est à dire une session de communication par exemple basée sur un empilement des protocoles SRTP, UDP et IP,entre deux applications hébergées respectivement par les terminaux T1 et T2. Ces applications sont typiquement appelée des navigateurs Web. Les ressources de transport de l'opérateur de T1, utilisées pour une telle session, telles que celles de son réseau d'accès LTE et de son réseau coeur EPC sont déterminées par le choix du serveur WebRTC qui offre le service web permettant au terminal T1 d'établir une session de communication avec le terminal T2. L'opérateur a donc intérêt à garder un contrôle sur l'établissement de la session WebRTC.

Lors d'une étape E1, l'utilisateur du terminal T1 sélectionne un identifiant du terminal T2, c'est à dire généralement un numéro de téléphone, généralement à partir d'un carnet d'adresses qui peut être local ou distant. S'il est local il peut être hébergé dans la mémoire du terminal ou dans celle de la carte SIM. S'il est distant, le terminal T1 y accède par exemple depuis un navigateur Web ou une application dédiée, selon une procédure connue.

L'expression "sélectionner un identifiant" dans le sens de l'étape E1 comprend également le cas où l'utilisateur compose lui-même le numéro de téléphone du terminal T2 s'il est absent du carnet d'adresses.

Lors d'une étape E2, qui peut être automatiquement déclenchée par l'étape E1, le terminal T1 obtient l'identifiant d'un serveur WebRTC, celle du serveur S, à l'aide duquel la session avec le terminal T2 doit être étalie. De préférence, cet identifiant peut être obtenu à partir de la carte SIM du terminal T1.

Par exemple, "http://webrtc.orange.com" est une chaine de caractères représentant une adresse URL correspondant au serveur WebRTC d'un opérateur nommé Orange, le serveur S. Cette chaine peut être stockée dans la carte SIM des terminaux mobiles gérés par cet opérateur, afin d'être lue par le terminal lors de l'étape E2.

Cette chaine peut aussi être obtenue en ajoutant un préfixe prédéfini, par des normes ou par l'opérateur lors de la personalisation du mobile, au nom de domaine nominal (home network domain name) figurant dans la carte SIM.

Par exemple si le nom de domaine est "ims.orange.com" et le préfixe est "webrtc", l'URL sera "http://webrtc.ims.orange.com".

Cette chaine peut encore être obtenue en ajoutant un préfixe prédéfini au nom de domaine nominal formé à partir des codes de pays (MCC) et de réseau de l'opérateur (MNC), par exemple tel que spécifié dans la norme 3GPP TS 23.003.

Par exemple, pour l'opérateur Orange, l'URL peut être :
"http://webrtc.ims.mnc015.mcc234.3gppnetwork.com".

Lors d'une étape E3, le terminal T1 construit une adresse comprenant à la fois l'identifiant du serveur S obtenu lors de l'étape E2 et l'identifiant du terminal T2 sélectionné lors de l'étape E1. Par exemple, si l'identifiant du terminal T2 est le numéro de téléphone de l'utilisateur associé au terminal T2, +33299124167, l'URL contruite peut être : "http://webrtc.ims.orange.com/tel/0033299124167".

Lors des étapes E4 et E5, le terminal T1 se connecte au serveur S.

Le terminal T1 émet lors de l'étape E4 une requête d'accès à un service WebRTC offert par le serveur S, dite requête de session au serveur S, sous forme d'une requête http utilisant l'URL construite lors de l'étape E3. On comprend que dans ce mode de réalisation de l'invention, la requête de session au serveur S comprend l'identifiant du terminal T2.

Le terminal T1 reçoit lors de l'étape E5 une réponse http de la part du serveur S, comprenant des instructions sous forme de code JavaScript, par exemple encapsulé dans une page HTML5. Ces instructions permettent au terminal T1 de générer un message à émettre selon un protocole décidé par le serveur WebRTC et de façon transparente pour le terminal, et en allant récupérer des informations dans le terminal comme par exemple les codecs disponibles, et/ou en allant récupérer certains flux audio/vidéo auprès du micro et/ou de la caméra pour pouvoir les émettre vers l'extéri eur.

Lors d'une étape E6, le terminal T1 génère une demande de session au terminal T2 en fonction du contenu du code JavaScript reçu lors de l'étape E5. Par exemple, si le protocole utilisé par le fournisseur de service WebRTC est SIP, un message SIP sur Websocket "INVITE tel:0033299124167 SIP 2.0" peut être généré par le terminal T1, si le code JavaScript comprend l'identifiant de T2. Websocket est un protocole permettant d'obtenir un canal de communications simultanées bidirectionnelles audessus de la couche TCP (Transmission Control Protocol, ou protocole de contrôle de transmission). Ce message SIP comprend aussi l'offre SDP (Session Description Protocol, ou protocole de description de session) du terminal T1, c'est à dire un ensemble de codecs utilisables par le terminal T1, ainsi que ses ports et adresses pour les flux média (voix, vidéo, etc.).

Alternativement, si le fournisseur de service WebRTC n'utilise pas le protocole SIP, une requête http peut être générée lors de l'étape E6, comprenant l'identifiant du terminal T2 ainsi que les codecs, adresses et ports de T1.

Si le code JavaScript reçu lors de l'étape E5 ne comprend pas l'identifiant du terminal T2, il faut que cet identifiant soit récupéré d'une façon ou d'une autre par le terminal pour être inséré dans la requête http générée lors de l'étape E6. Dans ce cas la page HTML5 aura typiquement, en plus du code JavaScript, un formulaire pour saisir l'identifiant, par exemple un numéro de téléphone.

Alternativement, d'autres protocoles que SIP ou http peuvent être utilisés. Dans ces cas ce sont aussi les instructions du code JavaScript qui indiqueront au navigateur du terminal T1 comment générer la demande de session, et en combien de messages.

Lors d'une étape E7 la demande de session générée lors de l'étape E6 est émise par le terminal T1 à destination du serveur S.

Lors d'une étape F1, le serveur S reçoit cette demande.

Lors d'une étape F2, le serveur S transmet vers le terminal T2 une demande identique ou équivalente, comprenant les mêmes information que la demande émise par le terminal T1 lors de l'étape E7. Il peut exister entre le serveur S et le terminal T2 un ou plusieurs serveurs intermédiaires. Le ou les protocoles utilisés entre le serveur S et le terminal T2 peuvent également différer de celui ou ceux utilisés entre le serveur S et le terminal T1, s'ils permettent une négotiation de l'offre SDP entre les terminaux T1 et T2.

Lors d'une étape F3, le terminal T2 émet en réponse vers le serveur S une demande de session à T1, comprenant une réponse SDP, c'est à dire un sous ensemble des codecs proposés par le terminal T1, ou de leur équivalent. Ce sous-ensemble comprend les codecs proposés par le terminal T1 que le terminal T2 est capable d'utiliser.

Lors d'une étape F4, le serveur S transmet vers le terminal T1 une demande identique ou équivalente, comprenant les mêmes information que la demande émise par le terminal T2 lors de l'étape F3.

Lors d'une étape E8, le terminal T1 reçoit la demande de session du terminal T2. Cette demande peut prendre la forme d'un message SIP "180 Ringing" ou "200 Ok", comprenant la réponse SDP, c'est à dire le sous-ensemble des codecs proposés par le terminal T1 que le terminal T2 est capable d'utiliser, ainsi qu'une adresse et un port sur lequel le terminal T2 attend les flux média émis par la terminal T1.

Enfin, lors d'une étape E9, la session de communication entre les terminaux T1 et T2 est établie en utilisant un ou plusieurs des codecs compatibles avec le terminal T2.

Dans un mode de réalisation alternatif, l'étape E3 est remplacée par une étape G3 (non illustrée) de construction d'une adresse comprenant l'identifiant du serveur S et un ou des préfixes éventuels, mais pas l'identifiant du terminal T2. Ceci permet de couvrir le cas où l'utilisateur compose lui-même un numéro qui n'est pas dans son carnet d'adresses.

L'étape E4 est remplacée par une étape G4 (non illustrée) d'émission d'une requête de session au serveur S, mais où la requête de session au serveur S ne comprend pas l'identifiant du terminal T2.

L'étape E1 de sélection de l'identifiant du terminal T2 peut-être remplacée par une étape G1 (non illustrée) d'obtention de l'identifiant du terminal T2, par exemple par composition du numéro par l'utilisateur. L'étape E1, ou l'étape G1, peut dans ce mode survenir après l'étape E2 d'obtention de l'identifiant du serveur S.

L'étape E6 attend alors la complétion de l'étape E1, ou de l'étape G1, et c'est uniquement lors de l'étape E7 d'émission de la demande de session que l'identifiant du terminal T2 est émis.

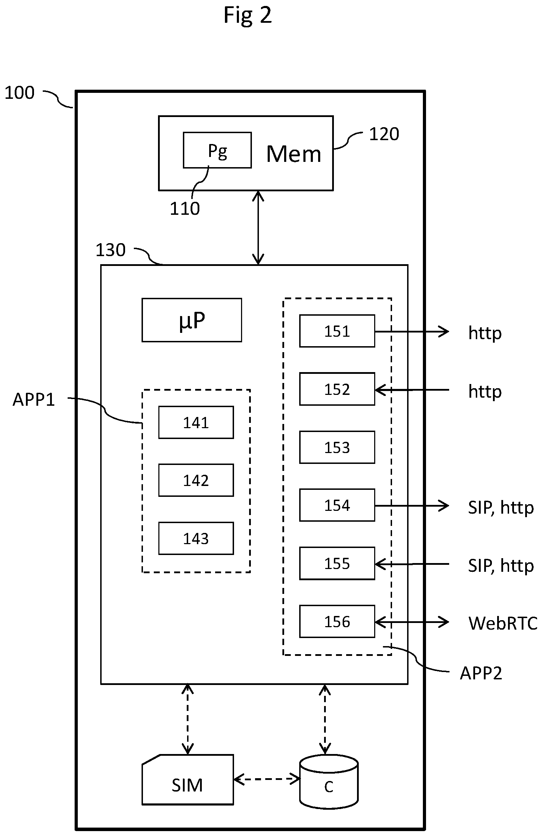

En relation avec la **figure 2****,** on présente maintenant un exemple de structure d'un dispositif d'établissement d'une session entre un premier terminal mobile et un deuxième terminal, selon un aspect de l'invention.

Le dispositif 100 met en oeuvre le procédé d'établissement d'une session entre un premier terminal mobile et un deuxième terminal, dont différents modes de réalisation viennent d'être décrits.

Un tel dispositif 100 peut être mis en oeuvre dans un terminal mobile apte à établir une connexion IP avec un noeud d'un réseau d'accès, portée par une connexion radio-électrique.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé d'établissement d'une session entre un premier terminal mobile et un deuxième terminal selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module de sélection 141, apte à sélectionner un identifiant d'un terminal distant dans un carnet d'adresses C,
- un module d'obtention 142, apte à obtenir un identifiant d'un serveur WebRTC à partir d'un module d'abonné SIM, ou carte SIM,
- un module de construction 143, apte à construire un identifiant tel que par exemple une adresse URL, en combinant l'identifiant du terminal distant sélectionné, l'identifiant du serveur WebRTC et éventuellement un autre identifiant tel qu'un préfixe prédéterminé,
- un module d'émission 151, apte à émettre une requête de session à destination d'un serveur WebRTC, sous forme d'une requête http comprenant l'adresse URL construite,
- un module de réception 152, apte à recevoir une instruction de la part du serveur WebRTC, par exemple une réponse http,
- un module de génération 153, apte à générer une demande de session au terminal distant à partir de l'instruction reçue du serveur WebRTC, par exemple sous la forme d'un message SIP ou d'une requête http comprenant une offre SDP,
- un module d'émission 154, apte à émettre la demande de session générée, à destination du serveur WebRTC,
- un module de réception 155, apte à recevoir en provenance du serveur WebRTC une demande de session de la part du terminal distant sélectionné, par exemple sous la forme d'un message SIP ou d'une réponse http comprenant une réponse SDP,
- un module d'établissement 156, apte à établir une session WebRTC avec le terminal distant sélectionné, par exemple à l'aide d'informations comprises dans la réponse SDP reçue.

Les modules 141, 142 et 143 peuvent être compris dans une première application APP1 tournant sur la carte SIM du terminal mobile mettant en oeuvre le dispositif 100. Le carnet d'adresses C peut être stocké dans la carte SIM, dans une mémoire du terminal mobile en dehors de la carte SIM ou dans un équipement séparé endehors du terminal mobile, accessible à l'aide d'une application dédiée. L'application APP1 peut également tourner sur le terminal mobile en dehors de la carte SIM. Cette application APP1 peut être préinstallée par le fabricant du mobile ou l'opérateur, ou installée par l'abonné par téléchargement depuis un site Internet tel que par exemple un AppStore.

Les modules 151 à 156 peuvent être compris dans une deuxième application APP2 jouant le rôle de client WebRTC. Cette application APP2 peut être un navigateur compatible WebRTC tournant sur le terminal mobile, tel que Chrome, Firefox, Opéra, Internet Explorer, Safari, etc. ou une application dédiée, compatible WebRTC, pouvant s'exécuter en dehors du navigateur et installée sur le terminal mobile. Cette application APP2 peut être préinstallée par le fabricant du mobile ou l'opérateur, ou installée par l'abonné par téléchargement depuis un site Internet tel que par exemple un AppStore.

Les modules décrits en relation avec la figure 2 peuvent être des modules matériels ou logiciels.

Grâce au dispositif d'établissement d'une session entre un premier terminal mobile et un deuxième terminal selon l'invention, plusieurs ergonomies sont possibles pour établir un appel en mode WebRTC, en particulier,
- soit le lancement de l'application APP1 depuis le carnet d'adresse C, en y sélectionnant un identifiant, ou contact, et en appuyant sur une icône ou une touche du terminal mobile pour lancer l'application APP2 et ainsi établir la session, c'est à dire l'appel,
- soit le lancement de l'application APP1 depuis l'écran d'accueil du terminal mobile, en appuyant sur une touche ou une icône pour ouvrir le carnet d'adresse C, y sélectionner un contact, lancer l'applciation APP2 et ainsi établir la session, c'est à dire l'appel.

L'association de l'application APP1 à une icône ou à une touche du terminal mobile est effectuée lors de l'initialisation de l'application APP1, par exemple lors de la mise en route du terminal avec la carte SIM insérée, selon un procédé qui dépend du terminal et du système d'exploitation utilisé.

Les exemples de réalisation de l'invention qui viennent d'être présentés ne sont que quelques uns des modes de réalisation envisageables. Ils montrent que l'invention permet à un abonné à un service de télécommunication mobile de bénéficier du service WebRTC le mieux adapté au réseau de son opérateur, de façon transparente pour lui, simplement en sélectionnant ou en saississant le numéro de téléphone de son correspondant sur son terminal mobile.

## Revendications

1. **Procédé** d'établissement d'une session entre un premier terminal mobile et un deuxième terminal, comprenant les étapes suivantes mises en oeuvre par le premier terminal :
• une étape d'obtention (E2) d'un identifiant d'un serveur WebRTC au moins à partir d'un module d'abonné à un opérateur de communications électroniques mobiles, compris dans le premier terminal, le module d'abonné comprenant une adresse partielle ou complète du serveur WebRTC, un identifiant d'un abonné et un identifiant de l'opérateur,
• une étape de construction d'une adresse comprenant l'identifiant du serveur WebRTC,
• une étape d'émission d'une requête d'accès à un service WebRTC, à destination du serveur WebRTC, la requête d'accès utilisant l'adresse construite,
• une étape de réception (E5) d'au moins une instruction de la part du serveur WebRTC,
• une étape de génération (E6), en fonction de l'au moins une instruction reçue, d'une demande de session comprenant un premier ensemble, relatif au premier terminal, d'au moins un paramètre caractéristique de la session demandée, et un identifiant du deuxième terminal,
• une étape d'émission (E7), à destination du deuxième terminal par l'intermédiaire d'un serveur apte à traiter la demande de session, de la demande de session générée lors de l'étape de génération,
• une étape de réception (E8), en provenance du deuxième terminal par l'intermédiaire dudit serveur apte à traiter la demande de session, d'un message comprenant un deuxième ensemble d'au moins un paramètre caractéristique de la session demandée, le deuxième ensemble étant relatif au deuxième terminal et ayant une intersection non nulle avec le premier ensemble,
• une étape d'établissement (E9) de la session entre le premier terminal mobile et le deuxième terminal, utilisant des paramètres de session communs aux deux terminaux, au moins à l'aide de l'intersection non nulle des ensembles de paramètres.

2. **Procédé** d'établissement d'une session selon la revendication 1, où l'adresse du serveur WebRTC est une URL comprenant au moins un préfixe, un code de pays MCC, un code de réseau d'opérateur MNC, et un nom de domaine de réseau domestique.

3. **Procédé** d'établissement d'une session selon la revendication 2, où l'au moins un préfixe est « ims » ou « webrtc ».

4. **Procédé** d'établissement d'une session selon l'une des revendications précédentes, où module d'abonné est une carte SIM.

5. **Procédé** d'établissement d'une session selon l'une des revendications précédentes, où l'identifiant du deuxième terminal est émis lors de l'étape d'émission (E7) de la demande de session.

6. **Procédé** d'établissement d'une session selon la revendication précédente, comprenant une étape d'obtention de l'identifiant du deuxième terminal.

7. **Procédé** d'établissement d'une session selon la revendication 6, où l'étape d'obtention de l'identifiant du deuxième terminal survient après l'étape d'obtention (E2) de l'identifiant du serveur WebRTC.

8. **Dispositif** d'établissement d'une session entre un premier terminal mobile et un deuxième terminal, comprenant les modules suivants :
• un module d'obtention (142) d'un identifiant d'un serveur WebRTC, au moins à partir d'un module d'abonné à un opérateur de communications électroniques mobiles, compris dans le premier terminal, le module d'abonné comprenant une adresse partielle ou complète du serveur WebRTC, un identifiant d'un abonné et un identifiant de l'opérateur,
• un module de construction (143) d'une adresse comprenant l'identifiant du serveur WebRTC,
• un module d'émission (151) d'une requête d'accès à un service WebRTC à destination d'un serveur WebRTC, la requête d'accès utilisant l'adresse construite,
• un module de réception (152) d'au moins une instruction de la part du serveur WebRTC,
• un module de génération (153) en fonction de l'au moins une instruction reçue, d'une demande de session comprenant un premier ensemble, relatif au premier terminal, d'au moins un paramètre caractéristique de la session demandée, et un identifiant du deuxième terminal,
• un module d'émission (154), à destination du deuxième terminal par l'intermédiaire d'un serveur apte à traiter la demande de session, de la demande de session générée à partir du module de génération,
• un module de réception (155), en provenance du deuxième terminal par l'intermédiaire dudit serveur apte à traiter la demande de session, d'un message comprenant un deuxième ensemble d'au moins un paramètre caractéristique de la session demandée, le deuxième ensemble étant relatif au deuxième terminal et ayant une intersection non nulle avec le premier ensemble,
• un module d'établissement (156) de la session entre le premier terminal mobile et le deuxième terminal, utilisant des paramètres de session communs aux deux terminaux, au moins à l'aide de l'intersection non nulle des ensembles de paramètres.

9. **Terminal mobile** comprenant un dispositif d'établissement d'une session entre un premier terminal mobile et un deuxième terminal, conforme à la revendication 8.

10. **Programme d'ordinateur, caractérisé en ce qu'**il comprend des instructions pour la mise en oeuvre des étapes du procédé d'établissement d'une session entre un premier terminal mobile et un deuxième terminal selon la revendication 1, lorsque ce programme est exécuté par un processeur.

11. **Support d'enregistrement** lisible par un terminal mobile sur lequel est enregistré le programme selon la revendication 10.

## Patentansprüche

1. Verfahren zum Aufbauen einer Sitzung zwischen einem ersten mobilen Endgerät und einem zweiten Endgerät, das die folgenden Schritte, die durch das erste Endgerät ausgeführt werden, umfasst:
• einen Schritt (E2) des Erhaltens einer Kennung eines WebRTC-Servers wenigstens von einem Abonnement-Modul eines Betreibers für mobile elektronische Kommunikation, das in dem ersten Endgerät enthalten ist, wobei das Abonnement-Modul eine partielle oder vollständige Adresse des WebRTC-Servers, eine Abonnement-Kennung und eine Kennung des Betreibers enthält,
• einen Schritt des Konstruierens einer Adresse, die die Kennung des WebRTC-Servers enthält,
• einen Schritt des Sendens einer Anforderung für den Zugriff auf einen WebRTC-Dienst zu dem WebRTC-Server, wobei die Zugriffsanforderung die konstruierte Adresse verwendet,
• einen Schritt (E5) des Empfangens wenigstens einer Anweisung von Seiten des WebRTC-Servers,
• einen Schritt (E6) des Erzeugens als Funktion der wenigstens einen empfangenen Anweisung einer Sitzungsanfrage, die eine mit dem ersten Endgerät in Beziehung stehende erste Gesamtheit aus wenigstens einem charakteristischen Parameter der angefragten Sitzung und eine Kennung des zweiten Endgeräts enthält,
• einen Schritt (E7) des Sendens der im Erzeugungsschritt erzeugten Sitzungsanfrage zu dem zweiten Endgerät durch einen zur Bearbeitung der Sitzungsanfrage geeigneten Server,
• einen Schritt (E8) des Empfangens einer Nachricht, die eine zweite Gesamtheit aus wenigstens einem charakteristischen Parameter der angefragten Sitzung enthält, von dem zweiten Endgerät durch den zur Bearbeitung der Sitzungsanfrage geeigneten Server, wobei die zweite Gesamtheit mit dem zweiten Endgerät in Beziehung steht und eine von null verschiedene Schnittmenge mit der ersten Gesamtheit besitzt,
• einen Schritt (E9) des Aufbauens der Sitzung zwischen dem ersten mobilen Endgerät und dem zweiten Endgerät unter Verwendung der den beiden Endgeräten gemeinsamen Sitzungsparameter wenigstens mithilfe der von null verschiedenen Schnittmenge der Parametergesamtheiten.

2. Verfahren zum Aufbauen einer Sitzung nach Anspruch 1, wobei die Adresse des WebRTC-Servers eine URL ist, die wenigstens ein Präfix, einen Länder-Code MCC, einen Betreibernetz-Code MNC und einen Domänennamen des Heimatsnetzes enthält.

3. Verfahren zum Aufbauen einer Sitzung nach Anspruch 2, wobei das wenigstens eine Präfix "ims" oder "webrtc" ist.

4. Verfahren zum Aufbauen einer Sitzung nach einem der vorhergehenden Ansprüche, wobei das Abonnement-Modul eine SIM-Karte ist.

5. Verfahren zum Aufbauen einer Sitzung nach einem der vorhergehenden Ansprüche, wobei die Kennung des zweiten Endgeräts im Schritt (E7) des Sendens der Sitzungsanfrage gesendet wird.

6. Verfahren zum Aufbauen einer Sitzung nach dem vorhergehenden Anspruch, das den Schritt des Erhaltens der Kennung des zweiten Endgeräts umfasst.

7. Verfahren zum Aufbauen einer Sitzung nach Anspruch 6, wobei der Schritt des Erhaltens der Kennung des zweiten Endgeräts nach dem Schritt (E2) des Erhaltens der Kennung des WebRTC-Servers erfolgt.

8. Vorrichtung zum Aufbauen einer Sitzung zwischen einem ersten mobilen Endgerät und einem zweiten Endgerät, die die folgenden Module umfasst:
• ein Modul (142) zum Erhalten einer Kennung eines WebRTC-Servers wenigstens anhand eines Abonnement-Moduls eines Betreibers für mobile elektronische Kommunikation, das in dem ersten Endgerät enthalten ist, wobei das Abonnement-Modul eine partielle oder vollständige Adresse des WebRTC-Servers, eine Abonnement-Kennung und eine Kennung des Betreibers enthält,
• ein Modul (143) zum Konstruieren einer Adresse, die die Kennung des WebRTC-Servers enthält,
• ein Modul (151) zum Senden einer Anforderung für den Zugriff auf einen WebRTC-Dienst zu einem WebRTC-Server, wobei die Zugriffsanforderung die konstruierte Adresse verwendet,
• ein Modul (152) zum Empfangen wenigstens einer Anweisung von Seiten des WebRTC-Servers,
• ein Modul (153) zum Erzeugen als Funktion der wenigstens einen empfangenen Anweisung einer Sitzungsanfrage, die eine mit dem ersten Endgerät in Beziehung stehende erste Gesamtheit aus wenigstens einem charakteristischen Parameter der angefragten Sitzung und eine Kennung des zweiten Endgeräts enthält,
• ein Modul (154) zum Senden der Sitzungsanfrage, die von dem Erzeugungsmodul erzeugt worden ist, zu dem zweiten Endgerät durch einen zur Bearbeitung der Sitzungsanfrage geeigneten Server,
• ein Modul (155) zum Empfangen einer Nachricht, die eine zweite Gesamtheit aus wenigstens einem charakteristischen Parameter der angefragten Sitzung enthält, von dem zweiten Endgerät durch den zur Bearbeitung der Sitzungsanfrage geeigneten Server, wobei die zweite Gesamtheit mit dem zweiten Endgerät in Beziehung steht und eine von null verschiedene Schnittmenge mit der ersten Gesamtheit besitzt,
• ein Modul (156) zum Aufbauen der Sitzung zwischen dem ersten mobilen Endgerät und dem zweiten Endgerät unter Verwendung der den beiden Endgeräten gemeinsamen Sitzungsparameter wenigstens mithilfe der von null verschiedenen Schnittmenge der Parametergesamtheiten.

9. Mobiles Endgerät, das eine Vorrichtung zum Aufbauen einer Sitzung zwischen einem ersten mobilen Endgerät und einem zweiten Endgerät nach Anspruch 8 enthält.

10. Computerprogramm, **gekennzeichnet durch** Anweisungen zum Ausführen der Schritte des Verfahrens zum Aufbauen einer Sitzung zwischen einem ersten mobilen Endgerät und einem zweiten Endgerät nach Anspruch 1, wenn dieses Programm durch einen Prozessor ausgeführt wird.

11. Aufzeichnungsträger, der von einem mobilen Endgerät lesbar ist und auf dem das Programm nach Anspruch 10 aufgezeichnet ist.

## Claims

1. **Method** for establishing a session between a first mobile terminal and a second terminal, comprising the following steps implemented by the first terminal:
• a step (E2) of obtaining an identifier of a WebRTC server at least from a subscriber module for a subscriber to a mobile electronic communications operator, contained in the first terminal, the subscriber module containing a partial or complete address of the WebRTC server, an identifier of a subscriber and an identifier of the operator,
• a step of constructing an address comprising the identifier of the WebRTC server,
• a step of transmitting a request to access a WebRTC service to the WebRTC server, the access request using the constructed address,
• a step (E5) of receiving at least one instruction from the WebRTC server,
• a step (E6) of generating, depending on the at least one received instruction, a session request comprising a first set, relating to the first terminal, of at least one characteristic parameter of the requested session, and an identifier of the second terminal,
• a step (E7) of transmitting, to the second terminal via a server which is able to process the session request, the session request generated during the generating step,
• a step (E8) of receiving, from the second terminal via said server which is able to process the session request, a message comprising a second set of at least one characteristic parameter of the requested session, the second set relating to the second terminal and having a non-zero intersection with the first set,
• a step (E9) of establishing the session between the first, mobile terminal and the second terminal, using session parameters common to the two terminals, at least with the aid of the non-zero intersection of the sets of parameters.

2. **Method** for establishing a session according to Claim 1, wherein the address of the WebRTC server is a URL comprising at least one prefix, a mobile country code, MCC, a mobile network code, MNC, and a home network domain name.

3. **Method** for establishing a session according to Claim 2, wherein the at least one prefix is "ims" or "webrtc".

4. **Method** for establishing a session according to one of the preceding claims, wherein the subscriber module is a SIM card.

5. **Method** for establishing a session according to one of the preceding claims, wherein the identifier of the second terminal is transmitted during the step (E7) of transmitting the session request.

6. **Method** for establishing a session according to the preceding claim, comprising a step of obtaining the identifier of the second terminal.

7. **Method** for establishing a session according to Claim 6, wherein the step of obtaining the identifier of the second terminal occurs after the step (E2) of obtaining the identifier of the WebRTC server.

8. **Device** for establishing a session between a first mobile terminal and a second terminal, comprising the following modules:
• a module (142) for obtaining an identifier of a WebRTC server, at least from a subscriber module for a subscriber to a mobile electronic communications operator, contained in the first terminal, the subscriber module containing a partial or complete address of the WebRTC server, an identifier of a subscriber and an identifier of the operator,
• a module (143) for constructing an address comprising the identifier of the WebRTC server,
• a module (151) for transmitting a request to access a WebRTC service to a WebRTC server, the access request using the constructed address,
• a module (152) for receiving at least one instruction from the WebRTC server,
• a module (153) for generating, depending on the at least one received instruction, a session request comprising a first set, relating to the first terminal, of at least one characteristic parameter of the requested session, and an identifier of the second terminal,
• a module (154) for transmitting, to the second terminal via a server which is able to process the session request, the session request generated by the generating module,
• a module (155) for receiving, from the second terminal via said server which is able to process the session request, a message comprising a second set of at least one characteristic parameter of the requested session, the second set relating to the second terminal and having a non-zero intersection with the first set,
• a module (156) for establishing the session between the first, mobile terminal and the second terminal, using session parameters common to the two terminals, at least with the aid of the non-zero intersection of the sets of parameters.

9. **Mobile terminal** comprising a device for establishing a session between a first, mobile terminal and a second terminal, in accordance with Claim 8.

10. **Computer program, characterized in that** it contains instructions for implementing the steps of the method for establishing a session between a first, mobile terminal and a second terminal according to Claim 1, when this program is executed by a processor.

11. **Storage medium** which can be read by a mobile terminal on which the program according to Claim 10 is stored.
